# EUROPEAN PATENT APPLICATION

(11) **EP 4 793 470 A1**
(43) Date of publication of application: **19.08.2026**
(21) Application number: 24911849.8
(22) Date of filing: 26.08.2024
(51) Int. Cl.: F01M 13/00, B60H 1/08, F01M 13/04, F01N 3/08, F01P 3/20, F01P 7/16

(54) **ENGINE**

(30) Priority: 26.12.2023 JP 2023218959
(71) Applicant: Kubota Corporation, Osaka-shi, Osaka 530-0011 (JP)
(72) Inventor: WATANABE, Soichiro, Sakai-shi, Osaka 592-8331 (JP); EDA, Kenta, Sakai-shi, Osaka 592-8331 (JP); KOMURA, Ryutaro, Sakai-shi, Osaka 592-8331 (JP); KITANO, Yuki, Sakai-shi, Osaka 592-8331 (JP); KUSHIGEMACHI, Takashi, Sakai-shi, Osaka 592-8331 (JP)
(74) Representative: Dolleymores
(86) International application number: PCT/JP2024/030195
(87) International publication number: WO 2025/141954

(57) **Abstract**

Provided is an engine capable of preventing freezing of moisture in blow-by gas in a blow-by gas return device 12 at the time of cold start. An engine includes: an engine-related component P; a heat exchanger Pa of the engine-related component P; an electric water pump 7; a bypass water path B that circulates engine cooling water 5 between a main water path M and the heat exchanger Pa of the engine-related component P by the electric water pump 7; and a blow-by gas return device 12 as the engine-related component P that returns blow-by gas in the crankcase to an intake path, in which the blow-by gas return device 12 is heated by the engine cooling water 5 passing through the heat exchanger 12a of the blow-by gas return device 12.

## Description

### TECHNICAL FIELD

The present invention relates to an engine, and more particularly to an engine capable of preventing freezing of moisture in a blow-by gas in a blow-by gas return device at the time of cold start.

### BACKGROUND ART

Conventionally, there is an engine including an engine main body, an electric water pump, and a water path for circulating engine cooling water by the electric water pump, in which the water path cools the engine main body with the engine cooling water (see, for example, Patent Document 1).

### PRIOR ART DOCUMENT

### PATENT DOCUMENT

Patent Document 1: Japanese Patent Laid-open Publication No. 2017-210880 (see Figs. 1 and 2)

### SUMMARY OF THE INVENTION

### PROBLEMS TO BE SOLVED BY THE INVENTION

### <<Problems>>

Freezing of moisture in the blow-by gas in the blow-by gas return device cannot be prevented at the time of cold start.

In the engine of Patent Document 1, an electric water pump is operated in a cold state to suppress icing of a throttle device. However, even when the electric water pump is operated, a blow-by gas return device cannot be heated by engine cooling water, and freezing of moisture in blow-by gas in the blow-by gas return device cannot be prevented at the time of cold start.

An object of the present invention is to provide an engine capable of preventing freezing of moisture in blow-by gas in a blow-by gas return device at the time of cold start.

### SOLUTIONS TO THE PROBLEMS

A main configuration of the invention of the present application is as follows.

An engine includes: an engine main body; a radiator; a mechanical water pump driven by a crankshaft; a main water path that cools the engine main body by circulating engine cooling water between the engine main body and the radiator by the mechanical water pump; an engine-related component; a heat exchanger of the engine-related component; an electric water pump; a bypass water path that circulates the engine cooling water between the main water path and the heat exchanger of the engine-related component by the electric water pump; and a blow-by gas return device that returns blow-by gas in the crankcase to an intake path as the engine-related component, in which the blow-by gas return device is heated by the engine cooling water passing through the heat exchanger of the blow-by gas return device.

### EFFECTS OF THE INVENTION

The invention of the present application has the following effects.

### < < Effects > >

Freezing of moisture in the blow-by gas in the blow-by gas return device can be prevented at the time of cold start.

According to this engine, even at the time of cold start at which the engine rotation speed becomes low and the mechanical water pump rotates at a low speed, the electric water pump that can be driven at a high speed without being affected by the engine rotation speed allows a required amount of engine cooling water to pass through the heat exchanger of the blow-by gas return device to heat the blow-by gas return device, so that freezing of moisture in the blow-by gas in the blow-by gas return device can be prevented at the time of cold start.

### BRIEF DESCRIPTION OF THE DRAWINGS

Fig. 1 is a block diagram of a cooling water path of an engine according to an embodiment of the present invention.
Fig. 2 is a control block diagram of a bypass water path of the cooling water path of Fig. 1.
Fig. 3 is a block diagram for explaining the engine according to the embodiment of the present invention, in which Fig. 3(A) is a block diagram of an intake path and a blow-by gas return path, and Fig. 3(B) is a block diagram of an exhaust path and a urea water path.
Fig. 4 is a diagram for explaining Specific Example 1 of an iron-based foreign matter capturing device (magnet type) of the engine according to the embodiment of the present invention, in which Fig. 4(A) is a longitudinal sectional side view, and Fig. 4(B) is a cross-sectional view taken along line B-B of Fig. 4(A).
Fig. 5 is a diagram for explaining two Specific Examples 2 of an iron-based foreign matter capturing device (filter type) of the engine according to the embodiment of the present invention, in which Fig. 5(A) is a longitudinal sectional side view of Specific Example 2-1 (flat filter type), Fig. 5(B) is a cross-sectional view taken along line B-B of Fig. 5(A), and Fig. 5(C) is a longitudinal sectional side view of Specific Example 2-2 (cylindrical filter type).
Fig. 6 is a diagram for explaining an electric water pump and engine-related components used in the engine according to the embodiment of the present invention, in which Fig. 6(A) is a longitudinal sectional side view of an electric water pump, Fig. 6(B) is a longitudinal sectional side view of an oil separator which is a blow-by gas return device, Fig. 6(C) is a longitudinal sectional side view of a PCV valve which is a blow-by gas return device, and Fig. 6(D) is a longitudinal sectional side view of a urea water injector.
Fig. 7 is a front view of the engine according to the embodiment of the present invention, in which a cooling water path and a urea water path of a urea water tank and a heat exchanger thereof are shown together.
Fig. 8 is a plan view of the engine according to the embodiment of the present invention, in which an air conditioner and a cooling water path of the heat exchanger are shown together.
Fig. 9 is a left side view of the engine according to the embodiment of the present invention.

### EMBODIMENTS OF THE INVENTION

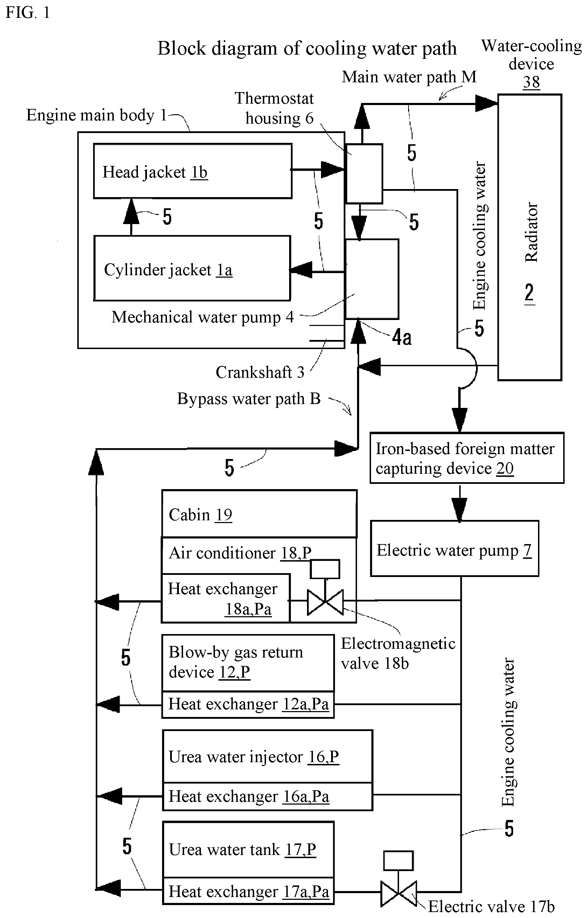

Figs. 1 to 9 are diagrams for describing an engine according to an embodiment of the present invention, and in this embodiment, a water-cooled vertical multicylinder straight diesel engine will be described.

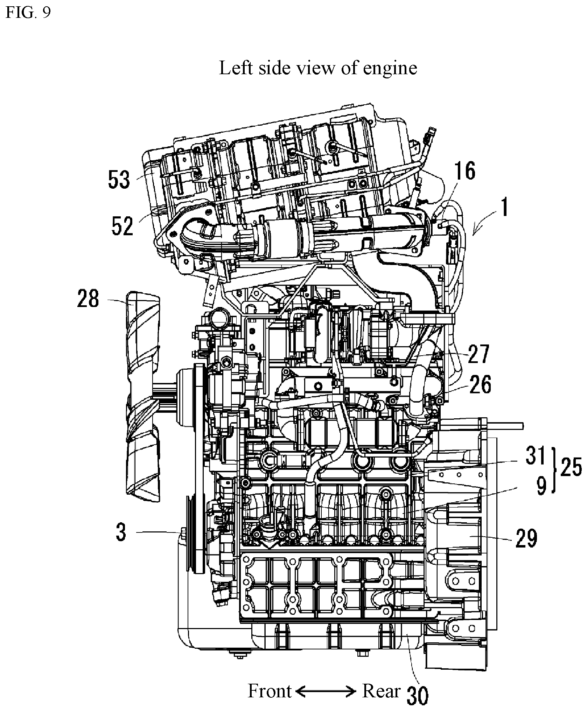

As shown in Fig. 9, an engine main body (1) of the engine includes a cylinder block (25), a cylinder head (26) assembled to an upper portion of the cylinder block (25), a cylinder head cover (27) assembled to an upper portion of the cylinder head (26), an engine cooling fan (28) disposed on a front side of the cylinder block (25) with an installation direction of a crankshaft (3) as a front-rear direction and one of the front and the rear of the front-rear direction as a front side, a flywheel housing (29) assembled to a rear side of the cylinder block (25), and an oil pan (30) assembled to a lower side of the cylinder block (25).

The cylinder block (25) includes a lower crankcase (9) and an upper cylinder portion (31), and a crankshaft (3) is installed in the crankcase (9).

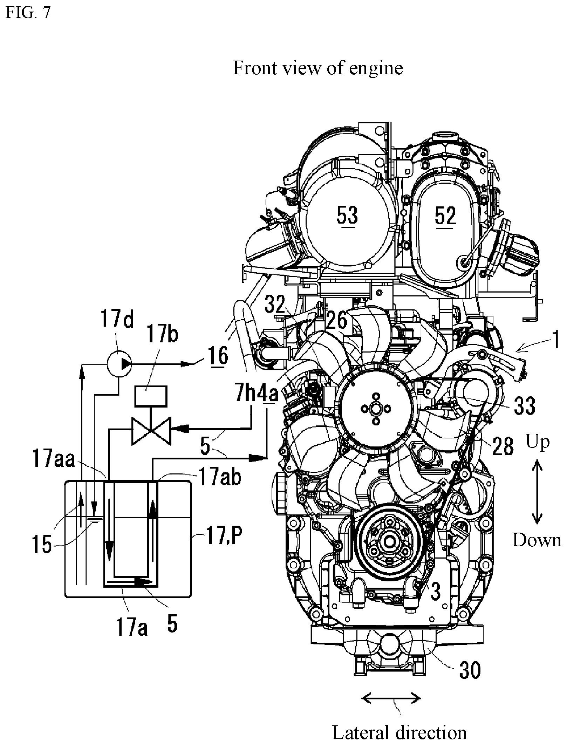

As shown in Fig. 7, when viewed in a direction parallel to the front-rear direction, with a width direction of the engine main body (1) orthogonal to the front-rear direction and the up-down direction as a lateral direction, the intake manifold (32) is assembled to one side of the cylinder head (26), and the exhaust manifold (33) is assembled to the other side of the cylinder head (26).

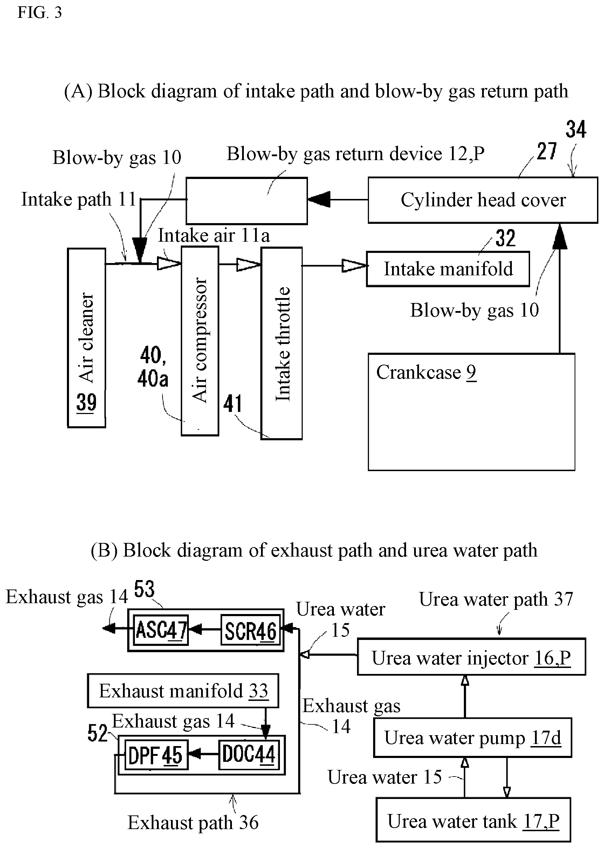

The engine main body (1) includes an intake path (11) shown in Fig. 3(A), a blow-by gas return path (34), a fuel supply device (not shown), an exhaust path (36) shown in Fig. 3(B), a urea water path (37), and a water cooling device (38) shown in Fig. 1.

Arrows in Fig. 3(A) indicate pipes and flow directions of an intake air (11a) or a blow-by gas (10).

A configuration of the intake path (11) is as follows.

As shown in Fig. 3(A), the intake path (11) includes an air cleaner (39), an air compressor (40a) of a supercharger (40), an intake throttle (41), and an intake manifold (32), and intake air (11a) purified by the air cleaner (39) is compressed by the air compressor (40a), passes through the intake throttle (41) and the intake manifold (32), and is supercharged to a combustion chamber (not shown).

As shown in Fig. 3(A), the blow-by gas return path (34) is of a PCV type including the crankcase (9), the cylinder head cover (27), and the blow-by gas return device (12), and the end of the blow-by gas return path (34) is connected to the intake path (11) between the air cleaner (39) and the air compressor (40a), and the blow-by gas (10) generated in the crankcase (9) is returned to the intake path (11) via the cylinder head cover (27) and the blow-by gas return device (12). PCV is an abbreviation for positive crankcase ventilation.

A fuel supply device (not shown) includes a common rail type fuel injection device using a common rail (not shown), and supplies fuel accumulated on the common rail from a fuel injector (not shown) to each combustion chamber.

Arrows in Fig. 3(B) indicate pipes and flow directions of exhaust gas (14) or the urea water (15).

Configurations of the exhaust path (36) and the urea water path (37) are as follows.

As shown in Fig. 3(B), the exhaust path (36) includes an exhaust manifold (33), a DOC (44), a DPF (45), an SCR (46), and an ASC (47). The urea water path (37) includes a urea water tank (17), a urea water pump (17d), and a urea water injector (16). The urea water injector (16) adds urea water (15) to the exhaust gas (14) between the DPF (45) and the SCR (46), NOₓ (nitrogen oxide) is reduced in the SCR (46) to N₂ (nitrogen gas) and H₂O (water vapor), and NH₃ (ammonia) that slips through the SCR (46) is purified in ASC (47).

DOC is an abbreviation for diesel oxidation catalyst, DPF is an abbreviation for diesel particulate filter, SCR is an abbreviation for selective catalytic reduction type catalyst, and ASC is an abbreviation for ammonia purification oxidation catalyst (ammonia slip catalyst).

Note that reference numeral (52) shown in Fig. 3(B) and Figs. 7 to 9 denotes a housing case for a DPF and the like that houses the DOC (44) and the DPF (45), and reference numeral (53) denotes a housing case for an SCR and the like that houses the SCR (46) and the ASC (47).

A configuration of the water cooling device (38) is as follows.

As shown in Fig. 1, the engine includes the engine main body (1), a radiator (2), a mechanical water pump (4) driven by a crankshaft (3), and a main water path (M) for cooling the engine main body (1) by circulating an engine cooling water (5) between the engine main body (1) and the radiator (2) by the mechanical water pump (4).

The engine also includes an engine-related component (P), a heat exchanger (Pa) of the engine-related component (P), an electric water pump (7), and a bypass water path (B) that causes the electric water pump (7) to circulate the engine cooling water (5) between a main water path (M) and the heat exchanger (Pa) of the engine-related component (P).

Arrows in Fig. 1 indicate a water path and a flowing direction of the engine cooling water (5).

The configuration of the main water path (M) is as follows.

As shown in Fig. 1, the main water path (M) includes a cylinder jacket (1a) surrounding a cylinder (not shown), a head jacket (1b) provided in the cylinder head (26), and a thermostat housing (6) accommodating a thermostat valve (not shown). After the engine is started, the thermostat valve is closed while the water temperature of the engine cooling water (5) is low. The engine cooling water (5) pressure-fed by the mechanical water pump (4) flows back to the mechanical water pump (4) through the cylinder jacket (1a), the head jacket (1b), and the thermostat housing (6). The engine cooling water (5) bypasses the radiator (2), thereby promoting warming-up.

When the water temperature of the engine cooling water (5) rises and the thermostat valve opens, the engine cooling water (5) pressure-fed by the mechanical water pump (4) flows back to the mechanical water pump (4) through the cylinder jacket (1a), the head jacket (1b), the thermostat housing (6), and the radiator (2), and the engine cooling water (5) is cooled by heat radiation in the radiator (2).

In this engine, the engine cooling water (5) is used as a heat medium of the heat exchanger (Pa) of the engine-related component (P).

As shown in Fig. 3(A), the engine includes, as the engine-related component (P), the blow-by gas return device (12) that returns the blow-by gas (10) in the crankcase (9) to the intake path (11). As shown in Fig. 1, the blow-by gas return device (12) is heated by the engine cooling water (5) passing through a heat exchanger (12a) of the blow-by gas return device (12).

As shown in Fig. 1, according to this engine, even at the time of cold start at which the engine rotation speed becomes low and the mechanical water pump (4) rotates at a low speed, the electric water pump (7) that can be driven at a high speed without being affected by the engine rotation speed allows a required amount of the engine cooling water (5) to pass through the heat exchanger (12a) of the blow-by gas return device (12) to heat the blow-by gas return device (12), so that freezing of moisture in the blow-by gas (10) in the blow-by gas return device (12) can be prevented at the time of cold start.

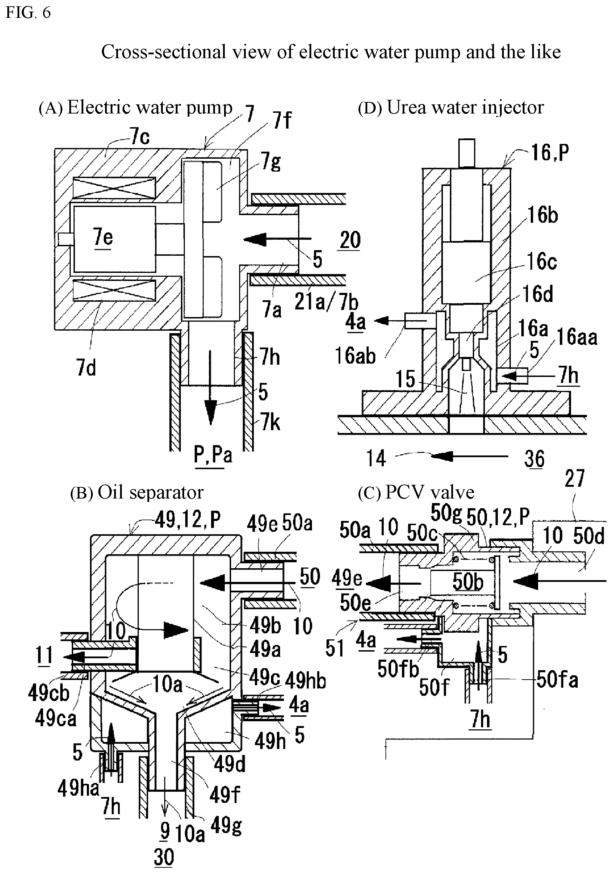

As shown in Fig. 6(B), the engine includes an oil separator (49) that separates an oil (10a) from the blow-by gas (10) as the blow-by gas return device (12), and is configured such that the oil separator (49) is heated by the engine cooling water (5) passing through a heat exchanger (49h) of the oil separator (49).

According to this engine, freezing of moisture in the blow-by gas (10) at the oil separator (49) can be prevented at the time of cold start.

As shown in Fig. 6(C), the engine includes a PCV valve (50) and a blow-by gas return passage (51) as the blow-by gas return device (12), and is configured such that the PCV valve (50) and the blow-by gas return passage (51) are heated by the engine cooling water (5) passing through a heat exchanger (50f) of the PCV valve (50) and a heat exchanger (not shown) of the blow-by gas return passage (51).

According to this engine, freezing of moisture in the blow-by gas (10) at the PCV valve (50) and the blow-by gas return passage (51) at the time of cold start can be prevented.

Only one of the PCV valve (50) and the blow-by gas return passage (51) may include the heat exchanger.

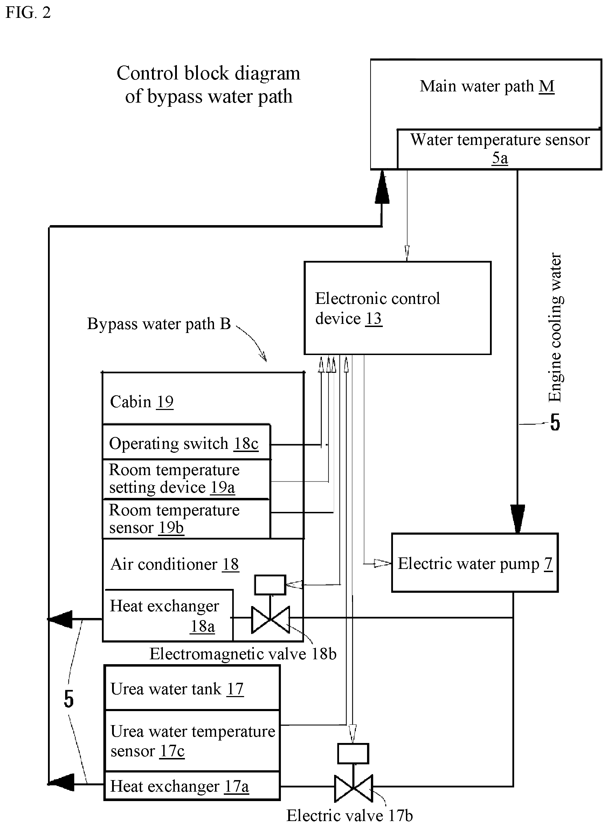

As shown in Fig. 2, the engine includes an electronic control device (13), and is configured such that driving of the electric water pump (7) is controlled by the electronic control device (13), and a target rotation speed of the electric water pump (7) is maintained at a predetermined constant value.

According to this engine, since the target rotation speed of the electric water pump (7) is maintained at a predetermined constant value, even when the engine rotation speed becomes low and the mechanical water pump (4) rotates at a low speed, the rotation speed of the electric water pump (7) is maintained at a constant value without being affected by the engine rotation speed, a required amount of the engine cooling water (5) passing through the heat exchanger (12a) of the blow-by gas return device (12) is obtained, and even when the water temperature of the engine cooling water (5) is low, heat required for heating the blow-by gas return device (12) can be radiated from the heat exchanger (12a), and moisture in the blow-by gas (10) in the blow-by gas return device (12) can be prevented from freezing at the time of cold start.

Arrows of thin lines shown between components such as the electronic control device (13) and the electric water pump (7) in Fig. 2 indicate signal paths and signal transmission directions between the components such as the electronic control device (13) and the electric water pump (7).

As shown in Fig. 2, the engine may be configured to include a water temperature sensor (5a) that detects the temperature of the engine cooling water (5) and the electronic control device (13), drive of the electric water pump (7) may be controlled by the electronic control device (13), and the rotation speed of the electric water pump (7) may increase as the water temperature of the engine cooling water (5) detected by the water temperature sensor (5a) decreases.

In this case, even when the water temperature of the engine cooling water (5) is low, the flow rate of the engine cooling water (5) passing through the heat exchanger (12a) of the blow-by gas return device (12) shown in Fig. 1 is obtained in a predetermined amount, the heat required for heating the blow-by gas return device (12) can be radiated from the heat exchanger (12a), and the moisture in the blow-by gas (10) can be prevented from freezing in the blow-by gas return device (12) at the time of cold start.

The electronic control device (13) is an engine ECU. The ECU is an abbreviation of an electronic control unit.

As shown in Fig. 6(D), the engine includes the urea water injector (16) that injects the urea water (15) into the exhaust gas (14) as the engine-related component (P), and is configured such that the urea water injector (16) is cooled by the engine cooling water (5) passing through a heat exchanger (16a) of the urea water injector (16).

According to this engine, since the urea water injector (16) heated by the exhaust gas (14) can be cooled by the engine cooling water (5), overheating of the urea water injector (16) can be prevented.

In addition, since the heat absorbed in the engine cooling water (5) at the time of cooling the urea water injector (16) is radiated by the blow-by gas return device (12), the heating efficiency of the blow-by gas return device (12) is high.

As shown in Fig. 7, the engine includes the urea water tank (17) as the engine-related component (P), and is configured such that the urea water (15) in the urea water tank (17) is heated by the engine cooling water (5) passing through the heat exchanger (17a) of the urea water tank (17).

According to this engine, since the urea water (15) in the urea water tank (17) is heated by the engine cooling water (5), it is possible to thaw the urea water (15) frozen in the urea water tank (17) at the time of cold start.

In addition, since the heat absorbed by the engine cooling water (5) at the time of cooling the urea water injector (16) is radiated to the urea water (15) in the urea water tank (17), the heating efficiency of the urea water (15) in the urea water tank (17) is high.

As shown in Fig. 2, the engine includes an electric valve (17b) that opens and closes a flow path of the engine cooling water (5) passing through the heat exchanger (17a) of the urea water tank (17), a urea water temperature sensor (17c) that detects a temperature of the urea water (15) in the urea water tank (17), and the electronic control device (13).

In this engine, the electronic control device (13) performs opening/closing control of the electric valve (17b), and the electric valve (17b) is in an open state when the urea water temperature detected by the urea water temperature sensor (17c) is in a heating necessity state where the urea water temperature is equal to or lower than a predetermined threshold, and the electric valve (17b) is in a close state when the urea water temperature detected by the urea water temperature sensor (17c) is in a heating non-necessity state where the urea water temperature exceeds the predetermined threshold.

According to this engine, when the urea water temperature is high, the electric valve (17b) is in a close state, so that the urea water (15) is not wastefully heated.

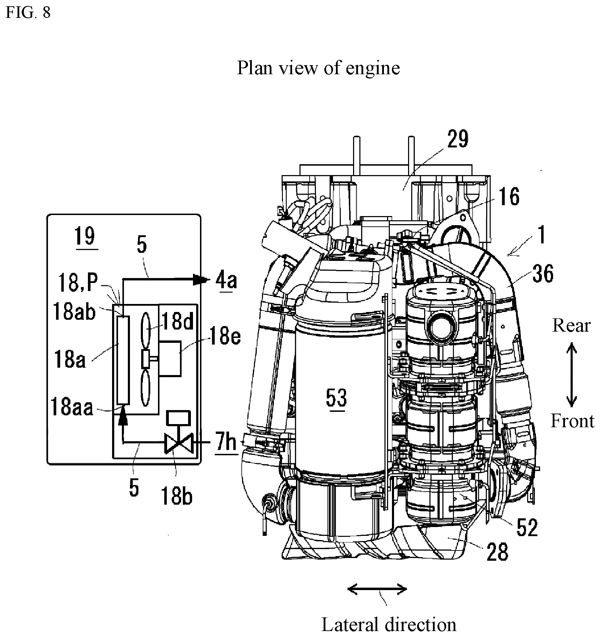

As shown in Fig. 8, the engine includes an air conditioner (18) as an engine-related component (P), and is configured such that air in a cabin (19) in which the air conditioner (18) is disposed is heated by the engine cooling water (5) passing through a heat exchanger (18a) of the air conditioner (18).

According to this engine, the heat of the engine cooling water (5) can be radiated by the air conditioner (18), so that the interior of the cabin (19) can be heated.

In addition, since the heat absorbed by the engine cooling water (5) at the time of cooling the urea water injector (16) is radiated by the air conditioner (18), the heating efficiency of the air conditioner (18) is high.

As shown in Fig. 2, the engine includes an electromagnetic valve (18b) that opens and closes a flow path of the engine cooling water (5) passing through the heat exchanger (18a) of the air conditioner (18), and an operating switch (18c) that operates the air conditioner (18). The electromagnetic valve (18b) is in an open state when the operating switch (18c) is turned on to the operation position, and the electromagnetic valve (18b) is in a close state when the operating switch (18c) is turned on to the operation stop position.

As shown in Fig. 2, the engine includes the electronic control device (13), a room temperature setting device (19a) that sets a target room temperature in a cabin (19) in which the air conditioner (18) is disposed, a room temperature sensor (19b) that detects the room temperature in the cabin (19), the water temperature sensor (5a) that detects the temperature of engine cooling water (5), and the electronic control device (13).

The engine is configured such that when the operating switch (18c) of the air conditioner (18) is turned on to an operation position, under the control of the electronic control device (13), an opening degree of the electromagnetic valve (18b) is adjusted based on a set room temperature set by the room temperature setting device (19a), a detected room temperature detected by the room temperature sensor (19b), and a water temperature detected by the water temperature sensor (5a) that detects a water temperature of the engine cooling water (5), and a room temperature in the cabin (19) approaches the set temperature.

As shown in Fig. 1, the engine includes an iron-based foreign matter capturing device (20) disposed on the upstream side of the bypass water path (B) with respect to the electric water pump (7), and is configured such that the iron-based foreign matter contained in the engine cooling water (5) is captured by the iron-based foreign matter capturing device (20).

As shown in Fig. 1, according to the engine, the iron-based foreign matter such as iron rust generated in the main water path (M) and the bypass water path (B) is captured by the iron-based foreign matter capturing device (20) on the upstream side of the bypass water path (B) before entering the electric water pump (7), so that it is possible to prevent the accumulation and catching of the iron-based foreign matter in the electric water pump (7).

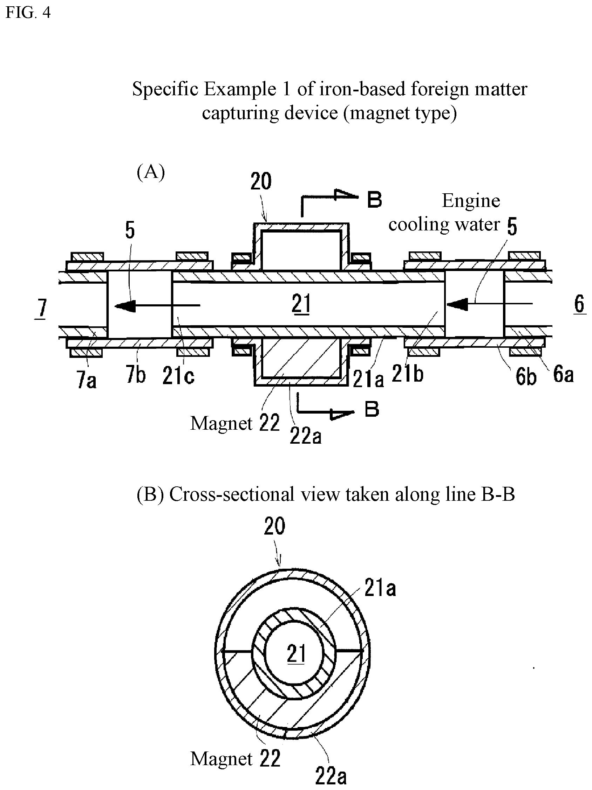

Specific Example 1 of the iron-based foreign matter capturing device (20) shown in Figs. 4(A) and 4(B) will be described.

The iron-based foreign matter capturing device (20) of Specific Example 1 includes a bypass upstream side water path portion (21) constituting an upstream side portion of a bypass water path (B) and a magnet (22) provided around the bypass upstream side water path portion (21), and is configured such that an iron-based foreign matter is held in the bypass upstream side water path portion (21) by a magnetic force of the magnet (22).

The magnet (22) used in the iron-based foreign matter capturing device (20) of Specific Example 1 is a permanent magnet.

In addition, a peripheral wall (21a) of the bypass upstream side water path portion (21) of Specific Example 1 is made of a magnetic metal.

The iron-based foreign matter capturing device (20) of Specific Example 1 shown in Figs. 4(A) and 4(B) includes the bypass upstream side water path portion (21), a magnet holder (22a) externally fitted to the bypass upstream side water path portion (21), and the magnet (22) housed in the magnet holder (22a). An upstream end portion (21b) of the bypass upstream side water path portion (21) is connected to a thermostat outlet (6a) of a thermostat housing (6) via a thermo-outlet-side tube (6b), and a downstream end portion (21c) communicates with a cooling water inlet (7a) of an electric water pump (7) via a water pump inlet side tube (7b).

The upstream end portion (21b) of the bypass upstream side water path portion (21) is detachably connected to the thermostat outlet side tube (6b), and the downstream end portion (21c) is detachably connected to the water pump inlet side tube (7b), so that the iron-based foreign matter capturing device (20) can be removed from the bypass water path (B) to clean or replace the iron-based foreign matter capturing device (20).

The magnet (22) may be an electromagnet.

Examples of a magnetic metal material used for the peripheral wall (21a) of the bypass upstream side water path portion (21) include iron, steel, nickel, and cobalt.

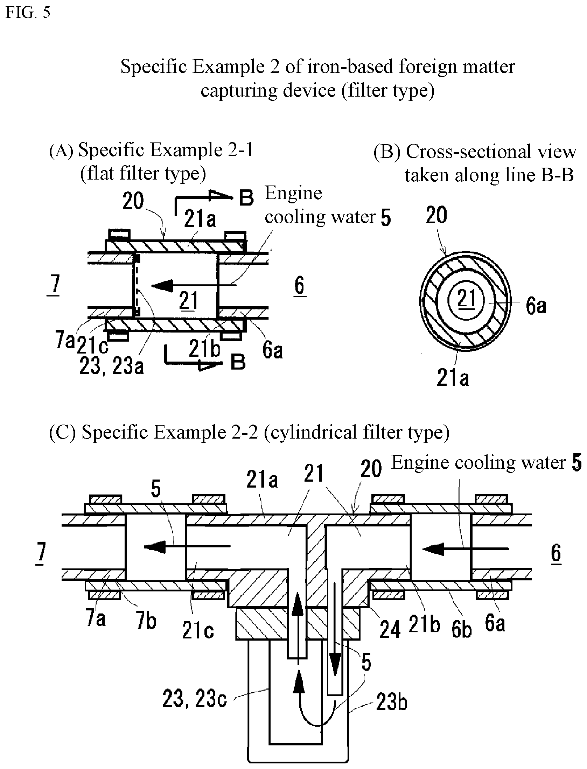

Two types of specific examples 2-1 and 2-2 of the iron-based foreign matter capturing device (20) shown in Figs. 5(A) and 5(C) will be described.

The iron-based foreign matter capturing device (20) of Specific Examples 2-1 and 2-2 includes a filter (23) that captures iron-based foreign matter.

According to the iron-based foreign matter capturing devices (20) of the two types of specific examples 2-1 and 2-2, the iron-based foreign matter such as iron rust generated in the main water path (M) and the bypass water path (B) shown in Fig. 1 is captured by the filter (23) of the iron-based foreign matter capturing device (20) on the upstream side of the bypass water path (B) before entering the electric water pump (7), so that it is possible to prevent the accumulation and catching of the iron-based foreign matter in the electric water pump (7).

As shown in Fig. 5(A), the iron-based foreign matter capturing device (20) of Specific Example 2-1 includes, as the filter (23), a flat filter (23a) that traverses a bypass upstream side water path portion (21) constituting an upstream side portion of the bypass water path (B).

The iron-based foreign matter capturing device (20) of Specific Example 2-1 includes the bypass upstream side water path portion (21) and the flat filter (23a), a peripheral wall (21a) of the bypass upstream side water path portion (21) is made of rubber, an upstream end portion (21b) of the bypass upstream side water path portion (21) is connected to a thermostat outlet (6a) of a thermostat housing (6), a downstream end portion (21c) is connected to a cooling water inlet (7a) of an electric water pump (7), and the flat filter (23a) is transversely attached to the cooling water inlet (7a) of the electric water pump (7).

The upstream end portion (21b) of the bypass upstream side water path portion (21) is detachably connected to the thermostat outlet (6a) of the thermostat housing (6), a downstream end portion (21c) is detachably connected to the cooling water inlet (7a) of the electric water pump (7), and the iron-based foreign matter capturing device (20) can be removed from the bypass water path (B) to clean or replace the iron-based foreign matter capturing device (20).

As shown in Fig. 5(C), in the iron-based foreign matter capturing device (20) of Specific Example 2-2, the filter (23) includes a tubular filter (23c) disposed in the filter case (23b) communicating with the bypass upstream side water path portion (21) constituting the upstream side portion of the bypass water path (B).

As shown in Fig. 5(C), in the iron-based foreign matter capturing device (20) of Specific Example 2-2, the filter case (23b) is detachably attached to an attachment seat (24) communicating with the bypass upstream side water path portion (21).

The attachment seat (24) is formed integrally with the bypass upstream side water path portion (21), the upstream end portion (21b) of the bypass upstream side water path portion (21) is connected to the thermostat outlet (6a) of the thermostat housing (6) via the thermostat outlet side tube (6b), and the downstream end portion (21c) communicates with the cooling water inlet (7a) of the electric water pump (7) via the water pump inlet side tube (7b).

The upstream end portion (21b) of the bypass upstream side water path portion (21) is detachably connected to the thermostat outlet side tube (6b), and the downstream end portion (21c) is detachably connected to the water pump inlet side tube (7b), so that the iron-based foreign matter capturing device (20) can be removed from the bypass water path (B) to clean or replace the iron-based foreign matter capturing device (20).

In this engine, one of the three specific examples of the iron-based foreign matter capturing device (20) of Specific Examples 1, 2-1, and 2-2 is used alone, two of them are used, or three of them are used as necessary.

When Specific Examples 1 and 2-1 are arranged in series or when Specific Examples 1 and 2-2 are arranged in series, it is desirable to arrange Specific Example 1 on the upstream side of the flow path.

The reason is as follows.

Even if a part of the iron-based foreign matter captured on the flow path upstream side by Specific Example 1 is released to the downstream side by the water flow of the engine cooling water (5), the iron-based foreign matter is re-captured by the filter (23) of Specific Examples 2-1 and 2-2, and is not re-released. Therefore, the capturing property of the iron-based foreign matter is high, the iron-based foreign matter is not released to the electric water pump (7) or the downstream side thereof, and most of the iron-based foreign matter is captured by Specific Example 1 on the upstream side, and the filter (23) of Specific Examples 2-1 and 2-2 on the downstream side is less likely to be clogged, so that the service life of the filter (23) becomes long.

A specific structure of the electric water pump (7) is as follows.

As shown in Fig. 6(A), the electric water pump (7) is a centrifugal pump, and includes a pump housing (7c), a stator (7d), a rotor (7e), a pump chamber (7f), and an impeller (7g). A water pump inlet side tube (7b) connected to a peripheral wall (21a) of a bypass upstream side water path portion (21) of the iron-based foreign matter capturing device (20) or a downstream side of the iron-based foreign matter capturing device (20) is connected to a cooling water inlet (7a) of the pump chamber (7f), and an associated part inlet side tube (7k) to each engine-related component (P) is connected to a cooling water outlet (7h) of the pump chamber (7f).

The tube of the present embodiment is flexible, and both ends thereof are detachably connected to an outlet or an inlet of the engine cooling water (5) or the blow-by gas (10) of each component.

In this engine, in the absence of the iron-based foreign matter capturing device (20), problems such as stagnation of the iron-based foreign matter in the pump chamber (7f) due to the magnetic force of the stator (7d) and the rotor (7e), and sticking of the iron-based foreign matter in the pump chamber (7f), or catching of the iron-based foreign matter in the gap between the pump chamber (7f) and the impeller (7g) and between the stator (7d) and the rotor (7e) tend to occur. On the other hand, in the presence of the iron-based foreign matter capturing device (20), the iron-based foreign matter is captured by the iron-based foreign matter capturing device (20) before flowing into the pump chamber (7f), and thus such problems are less likely to occur.

The engine includes the oil separator (49) shown in Fig. 6(B) and the PCV valve (50) shown in Fig. 6(C) as the blow-by gas return device (12).

The PCV valve (50) is disposed upstream of the blow-by gas return path (34) shown in Fig. 3(A), and the oil separator (49) is disposed downstream of the blow-by gas return path (34).

As shown in Fig. 6(B), the oil separator (49) includes a separator housing (49a), a blow-by gas swirling chamber (49b), a cylindrical oil filter (49c), and an oil drain chamber (49d), a blow-by gas inlet (49e) of the blow-by gas swirling chamber (49b) is connected to the PCV valve outlet side tube (50a), a blow-by gas outlet (49ca) of the cylindrical oil filter (49c) is connected to the intake path (11) via a blow-by gas outlet side tube (49cb), an oil outlet (49f) of the oil drain chamber (49d) communicates with the crankcase (9) via an oil outlet side tube (49g), and an oil (10a) of the oil drain chamber (49d) returns to the oil pan 30 via the crankcase (9).

As shown in Fig. 6(B), the heat exchanger (49h) of the oil separator (49) is disposed below the oil drain chamber (49d), a water inlet (49ha) of the heat exchanger (49h) communicates with the cooling water outlet (7h) of the electric water pump (7), and a water outlet (49hb) of the heat exchanger (49h) communicates with a cooling water inlet (4a) of the mechanical water pump (4).

In this engine, in the absence of the iron-based foreign matter capturing device (20), problems such as sticking of the iron-based foreign matter in the heat exchanger (49h) tend to occur. On the other hand, in the presence of the iron-based foreign matter capturing device (20), the iron-based foreign matter is captured by the iron-based foreign matter capturing device (20) before flowing into the heat exchanger (49h), and thus such problems are less likely to occur.

As shown in Fig. 6(C), the PCV valve (50) includes a valve housing (50g), a valve body (50b), and a valve spring (50c), a blow-by gas inlet (50d) of a valve housing (50g) communicates with the cylinder head cover (27), and a blow-by gas outlet (50e) of the valve housing (50g) communicates with the blow-by gas swirling chamber (49b) of the oil separator (49) via the PCV valve outlet side tube (50a).

As shown in Fig. 6(C), the heat exchanger (50f) of the PCV valve (50) is disposed below the valve housing (50g), a water inlet (50fa) of the heat exchanger (50f) communicates with the cooling water outlet (7h) of the electric water pump (7), and a water outlet (50fb) of the heat exchanger (50f) communicates with the cooling water inlet (4a) of the mechanical water pump (4).

In this engine, in the absence of the iron-based foreign matter capturing device (20), problems such as sticking of the iron-based foreign matter in the heat exchanger (50f) tend to occur. On the other hand, in the presence of the iron-based foreign matter capturing device (20), the iron-based foreign matter is captured by the iron-based foreign matter capturing device (20) before flowing into the heat exchanger (50f), and thus such problems are less likely to occur.

A specific structure of the urea water injector (16) is as follows.

As shown in Fig. 6(D), the urea water injector (16) includes an injector housing (16b), an electromagnetic solenoid (16c), and a nozzle portion (16d).

As shown in Fig. 6(D), the heat exchanger (16a) of the urea water injector (16) is formed around the nozzle portion (16d), a water inlet (16aa) of the heat exchanger (16a) is connected to the cooling water outlet (7h) of the electric water pump (7), and a water outlet (16ab) of the heat exchanger (16a) is connected to the cooling water inlet (4a) of the mechanical water pump (4).

When the iron-based foreign matter capturing device (20) is absent in the engine, problems such as stagnation of the iron-based foreign matter in the heat exchanger (16a) due to the magnetic force of the electromagnetic solenoid (16c), and sticking of the iron-based foreign matter in the heat exchanger (16a), or catching of the iron-based foreign matter in the gap in the heat exchanger (16a) tend to occur. Meanwhile, when the iron-based foreign matter capturing device (20) is present, the iron-based foreign matter is captured by the iron-based foreign matter capturing device (20) before flowing into the heat exchanger (16a), and thus such problems are less likely to occur.

A specific structure of the urea water tank (17) is as follows.

As shown in Fig. 7, the urea water (15) stored in the urea water tank (17) supplies the urea water (15) to the urea water injector (16) via the urea water pump (17d).

The U-shaped heat exchanger (17a) is disposed in the urea water tank (17), a water inlet (17aa) of the heat exchanger (17a) communicates with the cooling water outlet (7h) of the electric water pump (7) via the electric valve (17b), and a water outlet (17ab) of the heat exchanger (17a) communicates with the cooling water inlet (4a) of the mechanical water pump (4).

In this engine, in the absence of the iron-based foreign matter capturing device (20), problems such as stagnation of the iron-based foreign matter in the electric valve (17b) due to the magnetic force of the electric valve (17b), and sticking of the iron-based foreign matter in the electric valve (17b), or catching of the iron-based foreign matter in the gap in the electric valve (17b) tend to occur. On the other hand, in the presence of the iron-based foreign matter capturing device (20), the iron-based foreign matter is captured by the iron-based foreign matter capturing device (20) before flowing into the electric valve (17b), and thus such problems are less likely to occur.

A specific structure of the air conditioner (18) is as follows.

As shown in Fig. 8, the air conditioner (18) is disposed in the cabin (19), and includes the heat exchanger (18a) and the electric fan (18d). A water inlet (18aa) of the heat exchanger (18a) communicates with the cooling water outlet (7h) of the electric water pump (7), and a water outlet (18ab) of the heat exchanger (18a) communicates with the cooling water inlet (4a) of the mechanical water pump (4). The electromagnetic valve (18b) that opens and closes a water path of the heat exchanger (18a) is disposed inside the air conditioner (18).

In this engine, in the absence of the iron-based foreign matter capturing device (20), problems such as stagnation of the iron-based foreign matter in the heat exchanger (18a) due to the magnetic force of the motor (8e) of the electric fan (18d), and sticking of the iron-based foreign matter in the heat exchanger (18a), or catching of the iron-based foreign matter in the gap in the heat exchanger (18a) tend to occur. On the other hand, in the presence of the iron-based foreign matter capturing device (20), the iron-based foreign matter is captured by the iron-based foreign matter capturing device (20) before flowing into the heat exchanger (18a), and thus such problems are less likely to occur.

In addition, in this engine, in the absence of the iron-based foreign matter capturing device (20), problems such as stagnation of the iron-based foreign matter in the electromagnetic valve (18b) due to the magnetic force of the electromagnetic valve (18b), and sticking of the iron-based foreign matter in the electromagnetic valve (18b), or catching of the iron-based foreign matter in the gap in the electromagnetic valve (18b) tend to occur. On the other hand, in the presence of the iron-based foreign matter capturing device (20), the iron-based foreign matter is captured by the iron-based foreign matter capturing device (20) before flowing into the electromagnetic valve (18b), and thus such problems are less likely to occur.

In this engine, one or more types selected from the oil separator (49) of the blow-by gas (10), the PCV valve (50), the blow-by gas return passage (51), the urea water injector (16) shown in Figs. 6(B) to 6(D), the urea water tank (17) shown in Fig. 7, and the air conditioner (18) shown in Fig. 8 can be used as the engine-related component (P) as necessary.

### DESCRIPTION OF REFERENCE SIGNS

(1): Engine main body
(2): Radiator
(3): Crankshaft
(4): Mechanical water pump
(5): Engine cooling water
(5a): Water temperature sensor
(M): Main water path
(7): Electric water pump
(B): Bypass water path
(9): Crankcase
(10): Blow-by gas
(10a): Oil
(11): Intake path
(12): Blow-by gas return device
(12a): Heat exchanger
(13): Electronic control device
(14): Exhaust gas
(15): Urea water
(16): Urea water injector
(16a): Heat exchanger
(17): Urea water tank
(17a): Heat exchanger
(17b): Electric valve
(17c): Urea water temperature sensor
(18): Air conditioner
(18a): Heat exchanger
(18b): Electromagnetic valve
(18c): Operating switch
(19): Cabin
(19a): Room temperature setting device
(19b): Room temperature sensor
(49): Oil separator
(49h): Heat exchanger
(50): PCV valve
(50f): Heat exchanger
(51): Blow-by gas return passage

## Claims

1. An engine comprising:
an engine main body; a radiator; a mechanical water pump driven by a crankshaft; a main water path that cools the engine main body by circulating engine cooling water between the engine main body and the radiator by the mechanical water pump;
an engine-related component; a heat exchanger of the engine-related component; an electric water pump; a bypass water path that circulates the engine cooling water between the main water path and the heat exchanger of the engine-related component by the electric water pump; and
a blow-by gas return device that returns blow-by gas in the crankcase to an intake path as the engine-related component,
wherein the blow-by gas return device is heated by the engine cooling water passing through the heat exchanger of the blow-by gas return device.

2. The engine according to claim 1, further comprising an oil separator that separates oil from blow-by gas as the blow-by gas return device,
wherein the oil separator is heated by engine cooling water passing through a heat exchanger of the oil separator.

3. The engine according to claim 1, further comprising a PCV valve and/or a blow-by gas return passage as the blow-by gas return device,
wherein the PCV valve and/or the blow-by gas return passage is heated by engine cooling water passing through a heat exchanger of the PCV valve and/or the blow-by gas return passage.

4. The engine according to claim 1, further comprising an electronic control device,
wherein driving of the electric water pump is controlled by the electronic control device, and a target rotation speed of the electric water pump is maintained at a predetermined constant value.

5. The engine according to claim 1, further comprising:
a water temperature sensor that detects a temperature of engine cooling water; and an electronic control device,
wherein driving of the electric water pump is controlled by the electronic control device, and a rotation speed of the electric water pump increases as a water temperature of the engine cooling water detected by the water temperature sensor decreases.

6. The engine according to claim 1, further comprising a urea water injector that injects urea water into exhaust gas as an engine-related component,
wherein the urea water injector is cooled by engine cooling water passing through a heat exchanger of the urea water injector.

7. The engine according to claim 1, further comprising a urea water tank as an engine-related component,
wherein the urea water in the urea water tank is heated by engine cooling water passing through a heat exchanger of the urea water tank.

8. The engine according to claim 7, further comprising:
an electric valve that opens and closes a flow path of engine cooling water passing through a heat exchanger of a urea water tank; a urea water temperature sensor that detects a temperature of urea water in the urea water tank; and an electronic control device,
wherein the electric valve is controlled to open and close by the electronic control device, and when the urea water temperature detected by the urea water temperature sensor is in a heating required state where the urea water temperature is equal to or lower than a predetermined threshold, the electric valve is in an open state, and when the urea water temperature detected by the urea water temperature sensor is in a heating non-necessity state where the urea water temperature exceeds the predetermined threshold, the electric valve is in a close state.

9. The engine according to claim 1, further comprising an air conditioner as an engine-related component,
wherein air in a cabin in which the air conditioner is disposed is heated by engine cooling water passing through a heat exchanger of the air conditioner.

10. The engine according to claim 9, further comprising:
an electromagnetic valve that opens and closes a flow path of engine cooling water passing through the heat exchanger of the air conditioner; and an operating switch that operates the air conditioner,
wherein the electromagnetic valve is in an open state when the operating switch is turned on to an operation position, and the electromagnetic valve is in a close state when the operating switch is turned on to an operation stop position.

11. The engine according to claim 10, further comprising:
an electronic control device; a room temperature setting device that sets a target room temperature in a cabin in which an air conditioner is disposed; a room temperature sensor that detects the room temperature in the cabin; a water temperature sensor that detects a temperature of engine cooling water; and an electronic control device,
wherein when an operating switch of the air conditioner is turned on to an operation position, an opening degree of an electromagnetic valve is adjusted by control of the electronic control device on a basis of a set room temperature set by the room temperature setting device, a detected room temperature detected by the room temperature sensor, and a water temperature detected by the water temperature sensor that detects the water temperature of the engine cooling water, and a room temperature in the cabin approaches a set temperature.
